# EUROPEAN PATENT APPLICATION

(11) **EP 4 654 105 A1**
(43) Date of publication of application: **26.11.2025**
(21) Application number: 25163345.9
(22) Date of filing: 12.03.2025
(51) Int. Cl.: G06Q 10/0875, G06N 3/02, G06Q 30/018, G06N 20/00, G06Q 50/04

(54) **TRACEABILITY INFORMATION CREATION SUPPORT SYSTEM AND TRACEABILITY INFORMATION CREATION SUPPORT METHOD**

(30) Priority: 22.05.2024 JP 2024083449
(71) Applicant: Hitachi, Ltd., Tokyo 100-8280 (JP)
(72) Inventor: TOJO, Toshiko, Tokyo 100-8280 (JP); ADACHI, Tetsuro, Tokyo 100-8280 (JP); HAGA, Noriyuki, Tokyo 100-8280 (JP)
(74) Representative: Mewburn Ellis LLP

(57) **Abstract**

Provided is a traceability information creation support system, comprising a processor and a storage device, wherein the storage device holds an article and a model that has learned a relationship between an article and an article forming the article and a supplier thereof, and wherein the processor is configured to receive an input of traceability information indicating a relationship between an article and at least one article forming the article and a supplier thereof, estimate, by using the model, one or more articles and suppliers thereof that are lacking in the input traceability information, output the estimated one or more articles and suppliers thereof for confirmation by a user, store one or more articles and suppliers thereof confirmed by the user in the storage device as determined traceability information, and update the model by learning the determined traceability information.

## Description

### BACKGROUND OF THE INVENTION

This invention relates to a technology for supporting creation of traceability information.

For the reason of strengthening the supply chain, there is a need for a company, at the time of the occurrence of a disaster or a malfunction, of recognizing suppliers that are involved in the manufacture of its own products.

As a technology for acquiring information on parts incorporated in products, there is a technology as described in, for example, JP 2023-035112 A.

JP 2023-035112 A has the following description: "A system includes: a product life cycle management system, used by a manufacturing company manufacturing a final product by embedding parts operated by software, for managing information on the final product and the parts and the range of disclosure of data relating to software contracted between the manufacturing company and a company that provides the parts to the manufacturing company; and a product life cycle management system used by the providing company for managing the range of disclosure and software-related data that is data relating to the software. The product life cycle management system requests the product life cycle management system to disclose the software-related data within the range of disclosure, and the product life cycle management system transmits the software-related data to the product life cycle management system when the requested software-related data falls within the range of disclosure."

### SUMMARY OF THE INVENTION

A company that manufactures products can acquire information on its suppliers (what is called Tier 1 suppliers) with respect to parts that the company directly purchases among those the company incorporates in its own products. However, it is usually unable to acquire information on further upstream suppliers (what is called Tier 2 and beyond suppliers) that supply parts or materials that are incorporated in the parts of the Tier 1 suppliers. Therefore, in the upstream of the supply chain, it is not possible to identify suppliers that are significantly affected by risks such as disasters.

In order to solve at least one of the foregoing problems, one embodiment of this invention is a traceability information creation support system, comprising: a processor; and a storage device, wherein the storage device holds an article and a model that has learned a relationship between an article and an article forming the article and a supplier thereof, and wherein the processor is configured to: receive an input of traceability information indicating a relationship between an article and at least one article forming the article and a supplier thereof; estimate, by using the model, one or more articles and suppliers thereof that are lacking in the input traceability information; output the estimated one or more articles and suppliers thereof for confirmation by a user; store one or more articles and suppliers thereof confirmed by the user in the storage device as determined traceability information; and update the model by learning the determined traceability information.

According to at least one aspect of this invention, creation of the traceability information even including information on the suppliers that the company itself cannot grasp directly is supported.

Objects, configurations, and effects other than those described above become more apparent from the following descriptions of the embodiments of this invention.

### BRIEF DESCRIPTION OF THE DRAWINGS

FIG. 1 is a block diagram for illustrating an example of a configuration of an entire system according to a first embodiment of this invention.
FIG. 2 is a block diagram for illustrating an example of an internal configuration of the system according to the first embodiment of this invention.
FIG. 3 is a block diagram for illustrating an example of a hardware configuration of the system according to the first embodiment of this invention.
FIG. 4 is an explanatory diagram for illustrating an example of an outline of processing of the system according to the first embodiment of this invention.
FIG. 5 is an explanatory table for showing an example of a form of traceability information held by the system according to the first embodiment of this invention.
FIG. 6 is an explanatory diagram for illustrating another example of a form of the traceability information held by the system according to the first embodiment of this invention.
FIG. 7 is a flow chart for illustrating an example of processing of a traceability information creation support device in the first embodiment of this invention.
FIG. 8 is a flow chart for illustrating a first specific example of processing of the traceability information creation support device in the first embodiment of this invention.
FIG. 9 is a flow chart for illustrating a second specific example of processing of the traceability information creation support device in the first embodiment of this invention.
FIG. 10 is a flow chart for illustrating an example of processing of a supplier risk assessment device in the first embodiment of this invention.
FIG. 11 is an explanatory diagram for illustrating an example of processing of the supplier risk assessment device in the first embodiment of this invention.
FIG. 12 is an explanatory diagram for illustrating an example of a screen displayed by an information terminal in the first embodiment of this invention.
FIG. 13 is a block diagram for illustrating an example of an internal configuration of a system according to a second embodiment of this invention.

### DETAILED DESCRIPTION OF THE PREFERRED EMBODIMENTS

Now, referring to the accompanying drawings, description is given of embodiments of this invention.

### [First Embodiment]

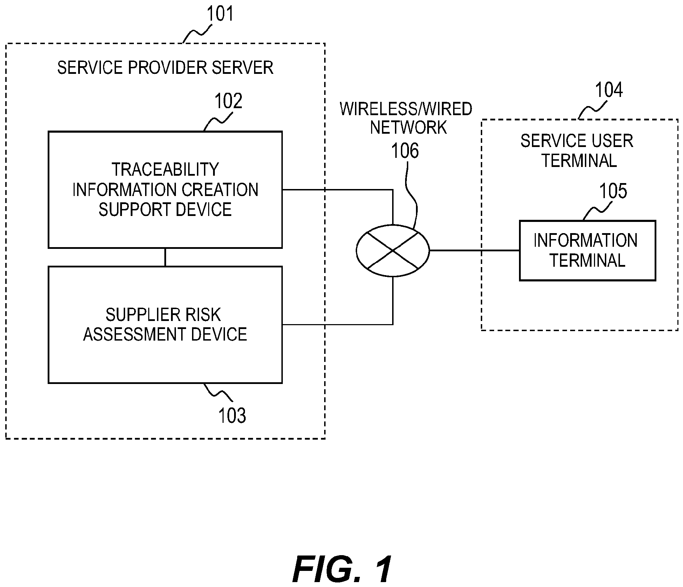

FIG. 1 is a block diagram for illustrating an example of a configuration of an entire system according to a first embodiment of this invention.

The system of the first embodiment of this invention is formed by, for example, a service provider server 101, a service user terminal 104, and a wireless or wired network 106 coupling the service provider server 101 and the service user terminal 104. Here, a service user is, for example, a company manufacturing products, and requests a service provider to acquire traceability information that traces, parts incorporated in its own products and suppliers of the parts, to upstream of supply chain. The service provider, in response to the request from the service user, estimates the traceability information and outputs results of the estimation, and also assesses the supplier's risk and outputs results of the assessment.

In this example, the service provider server 101 is formed of a traceability information creation support device 102 and a supplier risk assessment device 103. Meanwhile, the service user terminal 104 is formed of an information terminal 105. Those components are each implemented by a computer system.

For example, the service provider server 101 may be implemented by one computer, and the traceability information creation support device 102 and the supplier risk assessment device 103 may be implemented as functions of the computer. As another example, the traceability information creation support device 102 and the supplier risk assessment device 103 may be implemented as functions of independent computers. As still another example, functions of the traceability information creation support device 102 and the supplier risk assessment device 103 may be implemented as processing distributed to a plurality of computers. Further, the traceability information creation support device 102 may include some or all of functions of the supplier risk assessment device 103, or the supplier risk assessment device 103 may include some or all of functions of the traceability information creation support device 102.

Similarly, the information terminal 105 of the service user terminal 104 may also be implemented by the computer system. For example, the information terminal 105 may be a personal computer, a server device, or the like that a service user uses, or may be a portable information terminal such as, what is called, a smartphone or a tablet terminal.

An example in which the service provider server 101 and the service user terminal 104 are separate computer systems coupled via the network 106 is illustrated in FIG. 1, but the functions of the traceability information creation support device 102 and the supplier risk assessment device 103 may practically be implemented by a computer system of the service user side. In that case, the traceability information creation support device 102 and the supplier risk assessment device 103 are included in the service user terminal 104.

The entire system including the entire service provider server 101 or even the entire service user terminal 104, may be referred to, for example, a traceability information creation support system or a supplier risk assessment system, and the traceability information creation support device 102 and the supplier risk assessment device 103 may be provided as functions of the traceability information creation support system.

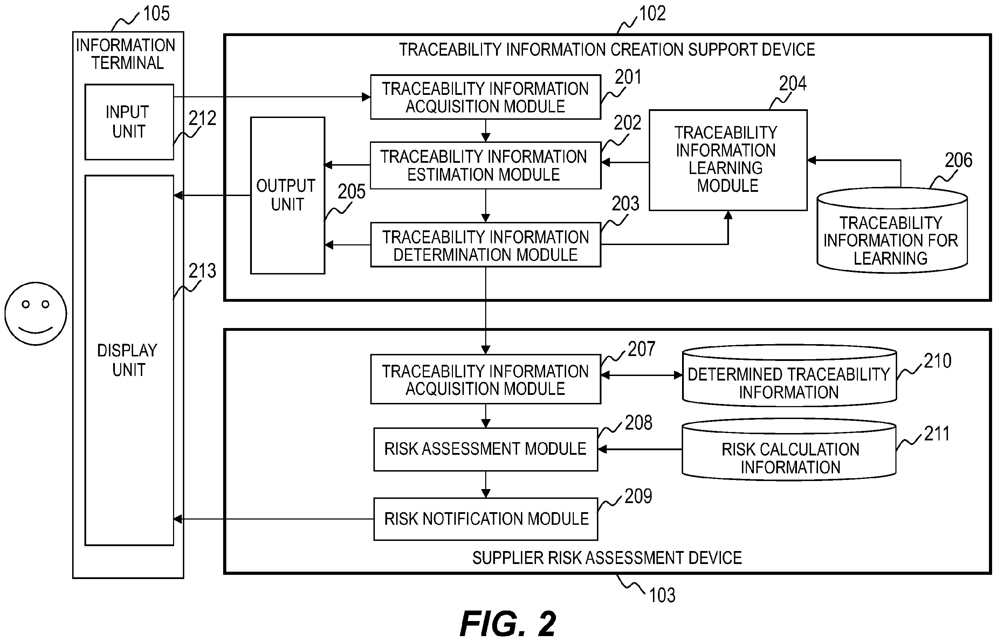

FIG. 2 is a block diagram for illustrating an example of an internal configuration of the system according to the first embodiment of this invention.

The traceability information creation support device 102 includes a traceability information acquisition module 201, a traceability information estimation module 202, a traceability information determination module 203, a traceability information learning module 204, and an output unit 205. Further, the supplier risk assessment device 103 includes a traceability information acquisition module 207, a risk assessment module 208, and a risk notification module 209. Those components are provided, for example, as functions of the computer system forming the service provider server 101.

Further, the traceability information creation support device 102 holds traceability information for learning 206. Further, the supplier risk assessment device 103 holds determined traceability information 210 and risk calculation information 211. Those pieces of information are stored in a storage device of the computer system forming the service provider server 101.

The information terminal 105 includes an input unit 212 and a display unit 213. Those components are provided as functions of the computer system forming the service user terminal 104.

Here, the overview of processing of the system according to the first embodiment is described with reference to FIG. 2. The traceability information learning module 204 generates and holds a learning model that estimates complete traceability information from incomplete traceability information by referring to the traceability information for learning 206 as learning data.

The service user inputs incomplete traceability information to the traceability information creation support device 102 by operating the input unit 212 of the information terminal 105. Here, the service user is, for example, a company manufacturing products, and the incomplete traceability information is information that the company grasps, among the pieces of traceability information on parts forming the products of the company, at that time.

Once the traceability information acquisition module 201 acquires incomplete traceability information, the traceability information estimation module 202 then estimates complete traceability information by inputting the incomplete traceability information to the learning model. The result of the estimation is output to the information terminal 105 via the output unit 205. The service user refers to the estimation result displayed by the display unit 213 and corrects the result as required. The correction of the estimation result is input to the traceability information creation support device 102 via the input unit 212.

The traceability information determination module 203 determines the traceability information based on the estimation result obtained by the traceability information estimation module 202 and the input from the service user. The determined traceability information is transmitted to the information terminal 105 via the output unit 205, and additionally, input to the traceability information learning module 204, and also input to the supplier risk assessment device 103. The display unit 213 of the information terminal 105 displays the determined traceability information. The traceability information learning module 204 adds the determined traceability information to the learning data to update the learning model.

The traceability information acquisition module 207 of the supplier risk assessment device 103 stores the traceability information acquired from the traceability information determination module 203 as the determined traceability information 210. The risk assessment module 208 assesses the risk of each supplier included in the traceability information based on the traceability information acquired by the traceability information acquisition module 207, and the risk calculation information 211. The risk notification module 209 transmits the information of the assessed risk to the information terminal 105. The display unit 213 of the information terminal 105 displays the information of the assessed risk.

The processing described above and the information to be referred to are described in detail later.

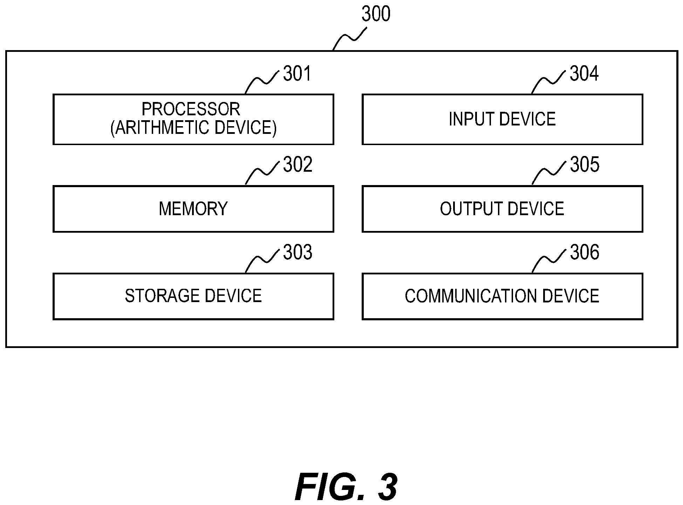

FIG. 3 is a block diagram for illustrating an example of a hardware configuration of the system according to the first embodiment of this invention.

Specifically, FIG. 3 shows an example of the hardware configuration of a computer system that implements the service provider server 101 and the service user terminal 104. A computer system 300 illustrated in FIG. 3 includes a processor (arithmetic device) 301, a memory 302, a storage device 303, an input device 304, an output device 305, and a communication device 306. The above-mentioned components are coupled to each other via a bus (not shown).

The memory 302 and the storage device 303 are storage devices that store programs and data used by the processor 301. For example, the traceability information for learning 206, the determined traceability information 210, and the risk calculation information 211 illustrated in FIG. 2 may be stored in the storage device 303, and at least some of those pieces of information may be stored in the memory 302 in response to needs of processing.

The memory 302 is formed by, for example, a semiconductor memory, and is utilized mainly for holding programs and data being executed. For example, programs and data stored in the storage device 303 are loaded onto the memory 302 at the time of startup or when required. The processor 301 executes various types of processing in accordance with programs stored in the memory 302. By the processor 301 operating in accordance with programs and controlling, as required, each component in the computer system 300, various functional modules such as the traceability information acquisition module 201, the traceability information estimation module 202, the traceability information determination module 203, the traceability information learning module 204, the traceability information acquisition module 207, the risk assessment module 208, and the risk notification module 209 illustrated in FIG. 2 are implemented.

The storage device 303 is formed by a mass storage device such as a hard disk drive (HDD) or a solid state drive (SSD), and is utilized to hold programs and data for a long time.

The processor 301 can be formed of a single processing unit or a plurality of processing units, and can include a single or a plurality of arithmetic units or a plurality of processing cores. The processor 301 can be mounted as one or a plurality of central processing units, microprocessors, microcomputers, microcontrollers, digital signal processors, state machines, logic circuits, graphic processing units, chip-on systems, and/or any devices that operate signals based on control instructions.

The input device 304 is a hardware device for a user to input instructions and information, for example. The output device 305 is a hardware device that presents various images for inputting/outputting, and is, for example, a display device or a printing device. The communication device 306 is an interface for the coupling to a network (for example, the wireless/wired network 106 illustrated in FIG. 1).

The computer system 300 may include two or more processors 301. Further, functions of the traceability information creation support device 102 and the supplier risk assessment device 103 can be mounted in a plurality of computer systems 300. In that case, the plurality of computer systems 300 communicate via a network. For example, some of the plurality of functions of the system according to the first embodiment may be mounted in one computer system 300, and the other parts may be mounted in the other computer systems 300.

The computer system 300 that implements the traceability information creation support device 102 and the supplier risk assessment device 103 may be, for example, a server device or a personal computer owned by a service provider, or a virtual server on, what is called, a cloud. In the latter case, the computer system 300 illustrated in FIG. 3 is implemented by computer resources on a cloud.

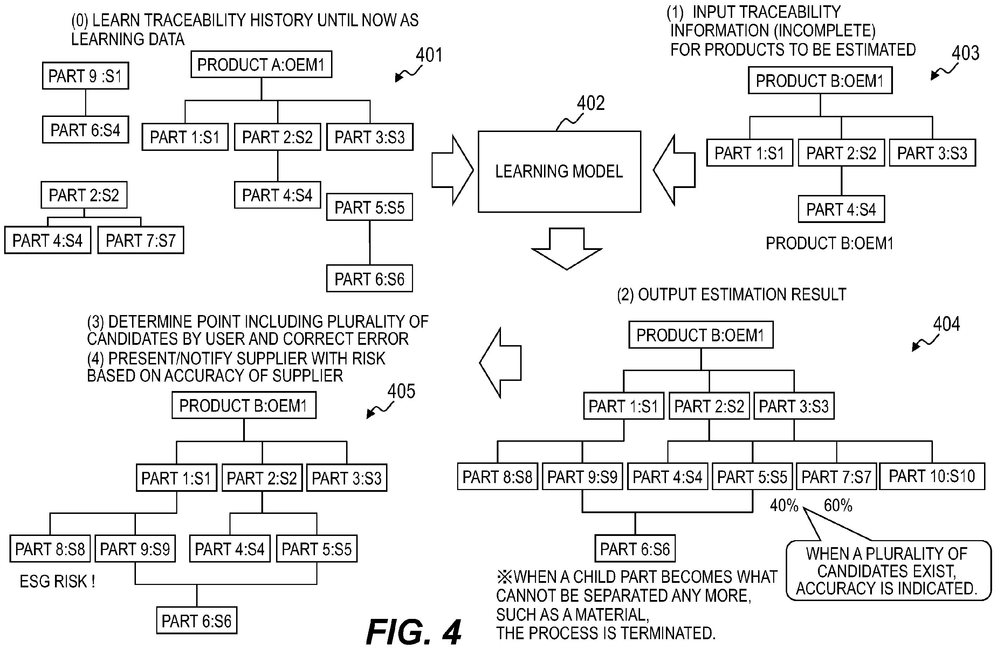

FIG. 4 is an explanatory diagram for illustrating an example of an outline of processing of the system according to the first embodiment of this invention.

First, the traceability information learning module 204 learns traceability history 401 until now as learning data and creates a learning model 402 (Step (0)).

The traceability history 401 until now illustrated in FIG. 4, is an example of the information included in the traceability information for learning 206. The traceability information for learning 206 includes, for example, traceability histories collected from companies manufacturing various final products and companies manufacturing parts. Here, each traceability history includes, for example, identification information of final products or parts manufactured by each company, identification information of parts or materials incorporated in such final products or parts, and identification information of the supplier of such parts or materials.

Among the traceability history 401 until now illustrated in FIG. 4, for example, "Product A: OEM1" indicates "Product A" manufactured by a manufacturer "OEM1" and "Part 1: S1" indicates "Part 1" supplied by a supplier "S1," and lines coupling therebetween indicates parent-child relations therebetween.

Specifically, an example of the history included in the traceability history 401 until now indicates that "Part 1" procured from a supplier "S1," "Part 2" procured from a supplier "S2," and "Part 3" procured from a supplier "S3" are incorporated in "Product A" manufactured by a manufacturer "OEM1," and that "Part 4" procured from a supplier "S4" by a supplier "S2" is incorporated in "Part 2" procured from the supplier "S2." Such relations as described above may be described as, "Part 1: S1," "Part 2: S2" and "Part 3: S3" are included as child parts of "Product A: OEM1," and "Part 4: S1" is included as a child part of "Part 2: S2." In the following, similar descriptions may be applied to the other products and parts.

This is an example of the information that is acquired from the manufacturer "OEM1" and accumulated in the traceability information for learning 206, and indicates the history in which those parts are actually procured from each supplier for the manufacturer "OEM1" to manufacture "Product A."

Other examples of the histories included in the traceability history 401 until now indicate that "Part 6: S4" is included as a child part of "Part 9: S1," "Part 4: S4" and "Part 7: S7" are included as child parts of "Part 2: S2," and "Part 6: S6" is included as a child part of "Part 5: S5." Those histories may be those acquired from, for example, suppliers "S1," "S2," and "S5," respectively.

In practice, more traceability histories are accumulated in the traceability information for learning 206. It is desired that the information be managed such that the information can be used as the learning for creating the learning model 402 but cannot be directly referred to by a third party for the purpose of, for example, investigating supply sources of parts forming a specific product.

When attention is paid to the history with respect to "Product A: OEM1" among the examples of histories above, from the viewpoint of the manufacturer "OEM1," "Part 1: S1," "Part 2: S2," and "Part 3: S3" correspond to, what is called, Tier1, and "Part 4: S4" corresponds to, what is called, Tier 2. Each company recognizes all information corresponding to Tier 1 from its viewpoint, but the company generally cannot grasp information in the hierarchy of Tier 2 or deeper other than exceptional cases, for example, a supplier discloses procurement sources, or the information can be grasped clearly by observing products. In other words, this history may be called incomplete (or partial) traceability information on "Products A: OEM1."

For convenience of description, for example, in the relationship between a product and constituent parts thereof, a part is described as belonging to "lower hierarchy" and a product as belonging to "higher hierarchy." Components that form a part in lower hierarchies belong to a further lower hierarchy. Suppliers of parts that belong to lower hierarchies correspond to upstream suppliers in the supply chain.

In the above-mentioned example, information of "Part 4: S4" among child parts of "Part 2: S2" has been exceptionally acquired. However, information on child parts of "Part 1: S1," "Part 3: S3," and "Part 4: S4," and information on child parts in further lower hierarchies (information indicating, for example, whether or not there exists a child part, and when a child part exists, which supplier supplies the child part and what kind of part is the child part) are not included. The same applies to information on child parts of "Part 2: S2" other than "Part 4: S4."

However, the traceability history 401 until now may include information on the child parts of "Part 1: S1," "Part 2: S2," "Part 3: S3" and "Part 4: S4," and the child parts in a further lower hierarchy of those child parts, in the history other than the history regarding "Product A: OEM1." Therefore, the traceability information learning module 204 generates a learning model that estimates complete traceability information by learning the traceability history 401 until now as learning data. Here, complete traceability information means, for a product or part to be estimated, traceability information that can be traced back to child parts thereof and further child parts in a lower hierarchy, for example, to a child part that cannot be separated any more, such as material.

Next, once the traceability information acquisition module 201 acquires incomplete traceability information 403 for a product to be estimated from the service user, the traceability information estimation module 202 inputs the incomplete traceability information 403 to the learning model 402 (Step (1)). Then, the traceability information estimation module 202 receives output from the learning model 402 as an estimation result 404, and outputs the output to the service user (Step (2)).

In the example of FIG. 4, the incomplete traceability information 403 includes information of the child parts "Part 1: S1," "Part 2: S2," "Part 3: S3" of "Product B: OEM1," and the child part "Part 4: S4" of "Part 2: S2." This is an example of information to be input when the service user wants to acquire traceability information for "Product B: OEM1" as a target.

In this example, the estimation result 404 output from the learning model 402 is formed of information of "Part 8: S8" and "Part 9: S9," which are child parts of "Part 1: S1," information of "Part 5: S5" or "Part 7: S7," which is a child part of "Part 2: S2," information of "Part 10: S10," which is a child part of "Part 3: S3," and information of "Part 6: S6," which is a child part of "Part 9: S9" and "Part 5: S5," in addition to the input incomplete traceability information 403.

As described later, at the time when estimation is performed until a child part becomes what cannot be separated any more, the processing of estimation is terminated. Further, the estimation result based on the learning model 402 may include information indicating an accuracy. For example, when an estimation result of a child part includes a plurality of candidates, the estimation result may be output together with the accuracy thereof. In the example of FIG. 4, it is estimated that "Part 5: S5" or "Part 7: S7" is included as a child part of "Part 2: S2" and it is output that the respective accuracies are "40%" and "60%." The accuracies can be utilized as a reference for the service user to select more reliable information on child parts.

The above-mentioned example shows the processing of estimating the child parts in a lower hierarchy and their suppliers when incomplete traceability information 403 is input, but the processing of estimating the parts or products in a higher hierarchy from the parts in a lower hierarchy may also be performed. For example, by generating a learning model 402 that estimates the parent part or product in a higher hierarchy from child parts in a lower hierarchy by learning the traceability history 401 until now in advance, and inputting incomplete traceability information formed only of "Part 2: S2" and child part thereof "Part 4: S4" to the learning model 402, the processing of estimating not only the child parts in a lower hierarchy of "Part 2: S2" and "Part 4: S4," but also, for example, "Product B: OEM1" which is a higher hierarchy product of "Part 2: S2," child parts thereof "Part 1: S1" and "Part 3: S3," and child parts thereof "Part 8: S8" in a further lower hierarchy can also be performed.

Next, the service user refers to the output estimation result 404 and inputs information to correct the estimation result 404 as required. The traceability information determination module 203 corrects the estimation result 404 in accordance with input information, and holds corrected traceability information as the determined traceability information 210 (Step (3)). For example, when the service user determines that the estimation result has an error, the service user inputs information to correct the error. Alternatively, as indicated in the estimation result 404, for example, when there are a plurality of candidates for child parts and the accuracies thereof are indicated together, information that selects any of the candidates may be input (or information that determines that all the candidates are incorrect and replaces the candidates with other information that may be correct).

Next, the risk assessment module 208 assesses the risk of each supplier included in the determined traceability information by referring to the risk calculation information 211, and the risk notification module 209 notifies the result (Step (4)). At this time, whether or not to issue the notification regarding risk may be determined based on the accuracy of estimation of the supplier.

In the notified traceability information 405 illustrated in FIG. 4, "Part 7: S7" out of candidates "Part 5: S5" and "Part 7: S7" of the child parts included in the estimation result 404 is deleted, and further, "Part 10: S10" that is a child part of "Part 3: S3" is deleted. Further, because the accuracy of estimation of the supplier S8 and the assessed risk satisfy predetermined criteria, information indicating that there is a risk on "Part 8: S8" is added.

In the above description, "Product" and "Part" are described distinctively, but this is a distinction for convenience of description of articles in circulation, and in reality, "Product" may be handled as "Part" and "Part" may be handled as "Product." For example, "Part 1" is a part forming "Product B," but the supplier "S1" may handle "Part 1" as "Product." Further, "Product B" is handled as "Product" by the manufacturer "OEM1," but the product may be handled as "Part" of a product by the manufacturer, which is in a further higher hierarchy and manufactures the product. In that case, the manufacturer "OEM1" is handled as a supplier by manufacturers in a still further higher hierarchy. In other words, in the description of embodiments of this invention, "Part" and "Product" may be replaced with "Article."

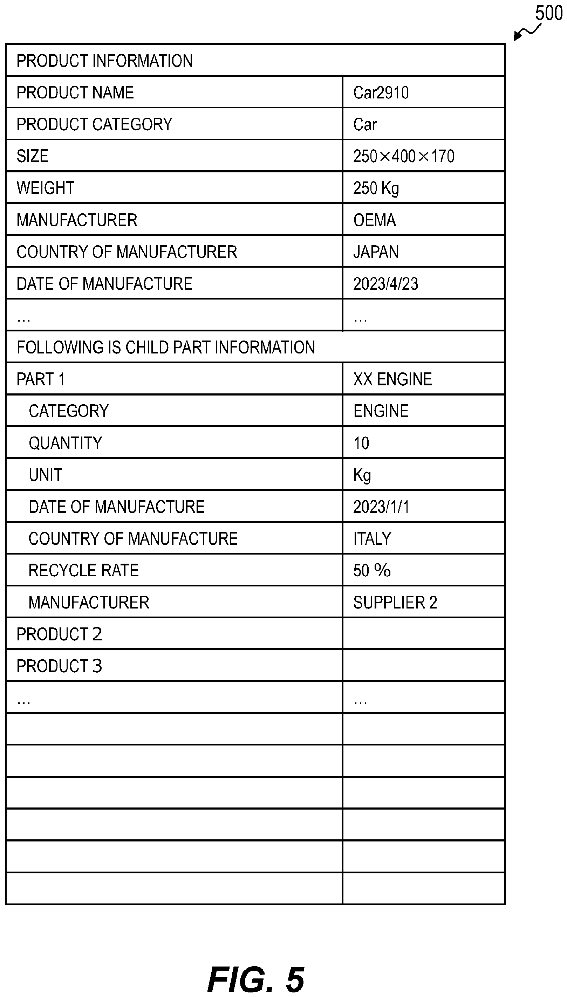

FIG. 5 is an explanatory table for showing an example of a form of the traceability information held by the system according to the first embodiment of this invention.

FIG. 5 shows, as an example, traceability information 500 on an automobile being a product. In this example, information identifying the car model as product name, information indicating the automobile as product category, information indicating the size, weight, and manufacturer of the product, country of manufacturer, date of manufacture, and the like are registered. In addition, information of the same items is registered for the child parts of the product.

The information shown in FIG. 5 is an example, and the essential information is the information identifying the parent-child relation of the parts and the supplier, but other information may be included to further improve the accuracy of the estimation. For example, the region to which the manufacturing plant belongs, start date of product manufacturing (when the product is started to be handled), unique ID, company name ID, and the like may be included. Information used in the supplier's risk assessment as described below (such as recycle rate, materials, region of manufacture, for example) may also be included.

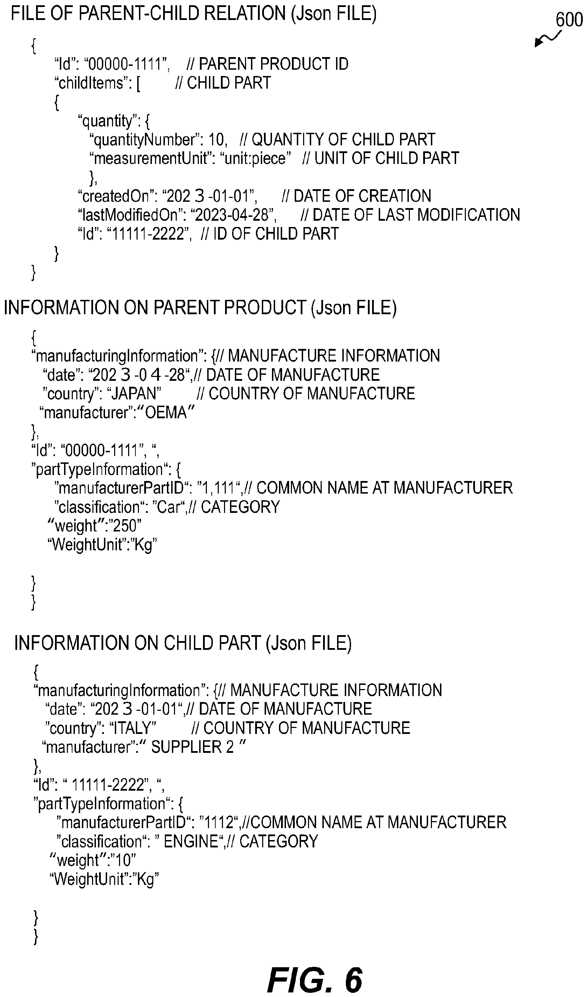

FIG. 6 is an explanatory diagram for illustrating another example of a form of the traceability information held by the system according to the first embodiment of this invention.

FIG. 5 shows an example of traceability information in a table format, but the traceability information may be handled on an actual computer system, for example, as a file in JSON format illustrated in FIG. 6. The traceability information 600 illustrated in FIG. 6 is the same information as shown in FIG. 5, expressed in JSON format.

The traceability information for learning 206, the determined traceability information 210, and the incomplete traceability information input to the traceability information estimation module 202 illustrated in FIG. 2 may all be described in the format illustrated in FIG. 5 or FIG. 6. However, FIG. 5 and FIG. 6 are examples of the format of the traceability information, and the traceability information creation support device 102 and the supplier risk assessment device 103 may use traceability information described in formats other than the formats described above.

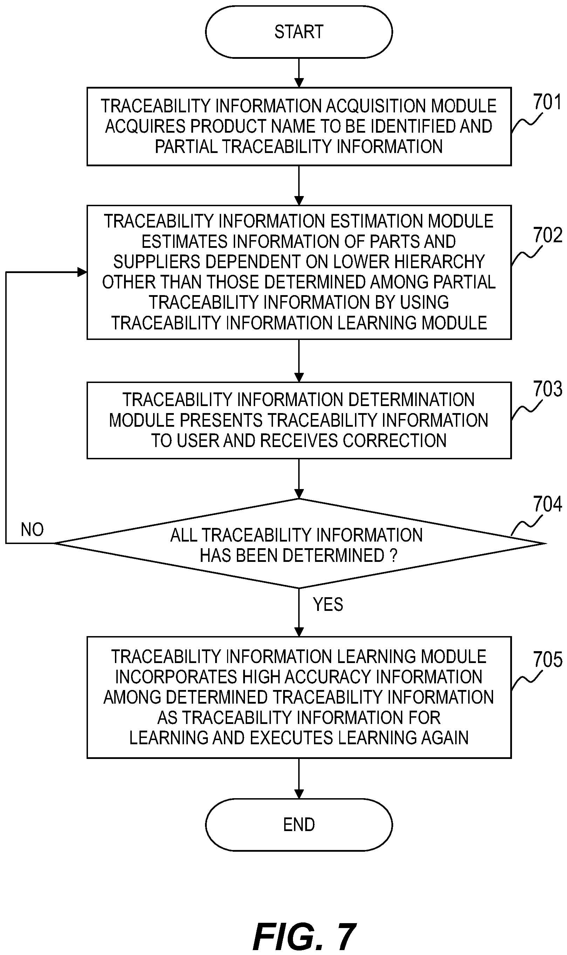

FIG. 7 is a flow chart for illustrating an example of processing of the traceability information creation support device 102 in the first embodiment of this invention.

First, the traceability information acquisition module 201 acquires the product name to be identified and the partial (that is, incomplete) traceability information on the product (Step 701). For example, "Product B" illustrated in FIG. 4 may be acquired as the product name to be identified, and the incomplete traceability information 403 regarding the Product B may be acquired as the partial traceability information.

Next, the traceability information estimation module 202 estimates information of child parts, in the hierarchy lower than the hierarchies of the determined parts, and suppliers which supply the child parts among the pieces of partial traceability information by using the learning model 402 created by the traceability information learning module 204 (Step 702). Here, the determined parts refer to parts included in the partial traceability information acquired in Step 701 and parts that have already been estimated, and determined by service user's confirmation.

At this time, Step (0) illustrated in FIG. 4 may have already been executed and the traceability information learning module 204 may hold the learning model 402, or the traceability information learning module 204 may execute Step (0) in Step 702 and create the learning model 402. In Step 702, the traceability information estimation module 202 may input the incomplete traceability information 403 illustrated in FIG. 4, for example, to the learning model 402 to acquire the estimation result 404 of complete traceability.

Next, the traceability information determination module 203 presents the traceability information estimated in Step 702 to the service user and receives corrections (Step 703). For example, the traceability information determination module 203 may present the estimation result 404 to the service user and correct the estimation result 404 in accordance with the correction instructions for the estimation result 404 from the service user.

For example, when information indicating that correction of the presented traceability information is not required is input by the service user, the traceability information determination module 203 holds the presented traceability information as determined traceability information. Alternatively, when an instruction to correct the presented traceability information is input by the service user, the traceability information determination module 203 corrects the presented traceability information in accordance with the correction instruction and holds the traceability information as determined traceability information. Further, as illustrated in Step (2) of FIG. 4, when a plurality of candidates are presented, the service user may input an instruction to select any of those candidates. In this case, the traceability information determination module 203 holds the selected candidate as the determined traceability information.

The traceability information determination module 203 determines whether or not all the traceability information has been determined (Step 704). For example, the traceability information determination module 203 determines whether or not all the child parts have been estimated in Step 702 and whether or not the confirmation and required correction by the service user have been completed for all the estimated child parts.

As a result, when there is traceability information that has not yet been determined (Step 704: No), estimation of the child parts that have not yet been estimated (Step 702) and confirmation of that by the service user (Step 703) are executed.

When it is determined that all the traceability information has been determined (Step 704: No), the traceability information learning module 204 updates the traceability information for learning 206 by incorporating the determined traceability information, and updates the learning model 402 by relearning the updated traceability information for learning 206 (Step 705). At this time, the traceability information learning module 204 may incorporate into the traceability information for learning 206 only the information with an accuracy higher than a predetermined criterion among the pieces of determined traceability information.

Here, the traceability information learning module 204 may learn the information newly incorporated into the traceability information for learning 206 with a weight greater than the weights of the other information. For example, the information included in the traceability information for learning 206 may include information indicating when the information was added to the traceability information for learning 206, and learning may be performed with the information weighted so that the weight increases as the time when the information was added becomes later. As a result, newer information can be reflected more strongly to create the learning model 402 with high accuracy.

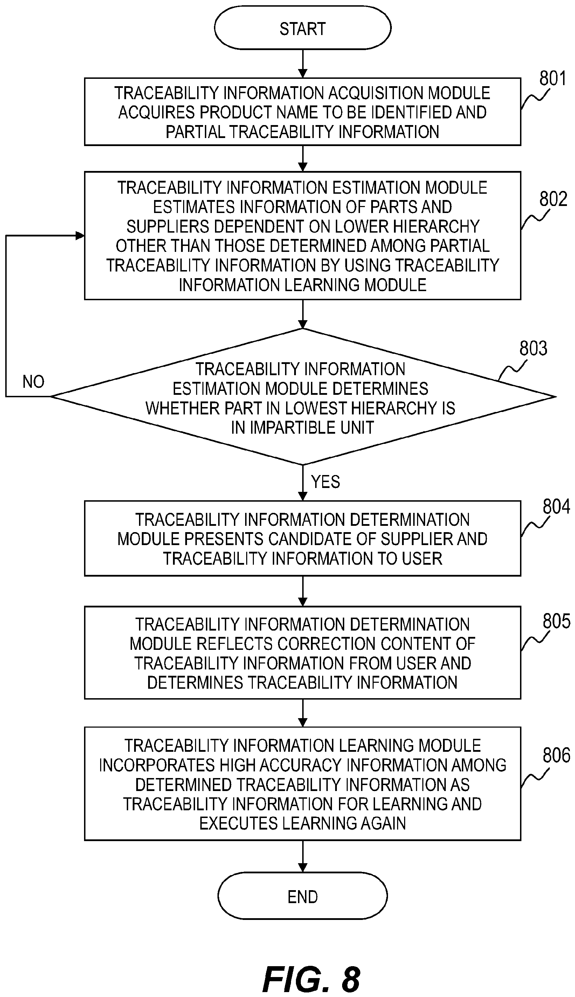

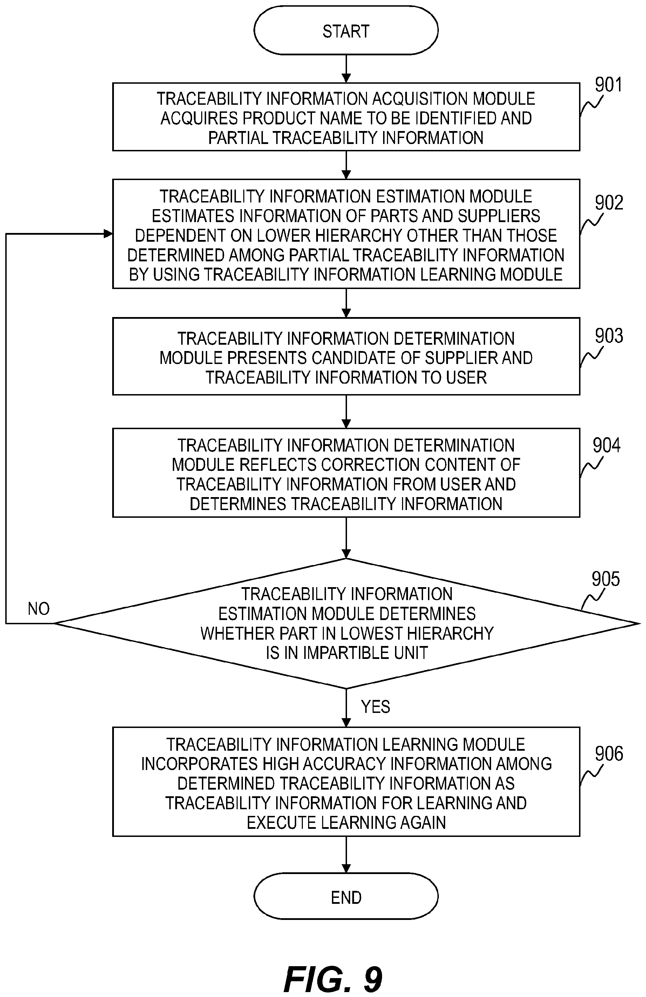

Specific examples of the processing of the traceability information creation support device 102 described above are described with reference to FIG. 8 and FIG. 9. In other words, all the processing procedures illustrated in FIG. 8 and FIG. 9 indicate an example of a specific procedure for executing the processing illustrated in FIG. 7.

In the processing illustrated in FIG. 8, the traceability information creation support device 102 estimates the child parts in a lower hierarchy for the input partial traceability information, and when all the parts in the lowest hierarchy are in impartible units, the entire estimated traceability information is presented to the service user to receive corrections.

In contrast, in the processing illustrated in FIG. 9, the traceability information creation support device 102 estimates the child parts in a lower hierarchy for the input partial traceability information, and presents to the service user the estimation result for each estimated part (or for each hierarchy) and receives corrections, and repeats this process until all the parts in the lowest hierarchy are in impartible units.

FIG. 8 is a flow chart for illustrating a first specific example of processing of the traceability information creation support device 102 in the first embodiment of this invention.

Step 801 and Step 802 of FIG. 8 are the same as Step 701 and Step 702 of FIG. 7, respectively, and therefore description thereof is omitted. Next, the traceability information estimation module 202 determines whether or not the part in the lowest hierarchy of the estimated traceability information is in an impartible unit (Step 803). For example, the part in the lowest hierarchy has become one, such as raw material, that cannot identify its child parts, and there are no suppliers in the hierarchy below the part, it is determined that the part in the lowest hierarchy is in an impartible unit.

For example, the traceability information creation support device 102 may hold in advance a database of parts that correspond to the impartible units, and the traceability information estimation module 202 may refer to that database to make the determination in Step 803. Alternatively, when no child part with an accuracy higher than a predetermined criterion is acquired as the output of the learning model 402, it may be determined that the part in the lowest hierarchy is in an impartible unit.

In Step 803, when it is determined that at least one of the parts in the lowest hierarchy included in the traceability information estimated so far is not in an impartible unit (Step 803: No), the traceability information estimation module 202 returns the process to Step 802 to estimate the child parts of that part in a lower hierarchy and their suppliers.

In Step 803, when it is determined that all the parts in the lowest hierarchy included in the traceability information estimated so far are in impartible units (Step 803: Yes), the traceability information determination module 203 presents the estimated traceability information including estimated suppliers to the service user (Step 804).

Next, the traceability information determination module 203 receives, from the service user, corrections for the presented traceability information, and determines the traceability information by reflecting the correction contents (Step 805). The determination of "Yes" in Step 803 and the execution of Step 805 corresponds to the determination of "Yes" in Step 704 of the processing of FIG. 7.

Step 806, which is executed next, is the same as Step 705 of FIG. 7, and therefore description thereof is omitted.

FIG. 9 is a flow chart for illustrating a second specific example of processing of the traceability information creation support device 102 in the first embodiment of this invention.

Step 901 and Step 902 of FIG. 9 are the same as Step 701 and Step 702 of FIG. 7, respectively, and therefore description thereof is omitted. Next, the traceability information determination module 203 presents the estimated traceability information including the estimated supplier to the service user (Step 903).

Next, the traceability information determination module 203 receives, from the service user, corrections for the presented traceability information, and determines the traceability information by reflecting the correction contents (Step 904).

Next, the traceability information estimation module 202 determines whether or not the part in the lowest hierarchy of the estimated traceability information is in an impartible unit (Step 905). This determination is executed in the same manner as in Step 803 of FIG. 8.

In Step 905, when it is determined that the part in the lowest hierarchy included in the estimated traceability information is not in an impartible unit (Step 905: No), the traceability information estimation module 202 returns the process to Step 902 to estimate the child parts of that part in a lower hierarchy and their suppliers. After that, the traceability information determination module 203 executes Step 903 and Step 904 for the estimation results.

In Step 905, when it is determined that the part in the lowest hierarchy included in the estimated traceability information is in an impartible unit (Step 905: Yes), the traceability information learning module 204 executes Step 906. The determination of "Yes" in Step 905 corresponds to the determination of "Yes" in Step 704 of the processing of FIG. 7. Step 906 is the same as Step 705 of FIG. 7, and therefore description thereof is omitted.

In the processing procedures of FIG. 7 to FIG. 9 described above, the processing of estimating parts in a lower hierarchy from products or parts in a higher hierarchy has been described, but the processing of estimating parts or products in a higher hierarchy from parts in a lower hierarchy may also be performed, as described with reference to FIG. 4. In that case, for example, in Step 702, Step 802, and Step 902, the traceability information estimation module 202 uses the learning model 402 to estimate the parts or products in a hierarchy higher than the determined parts. Further, in Step 704, Step 803, and Step 905, the traceability information estimation module 202 determines whether or not the estimation has reached the final product.

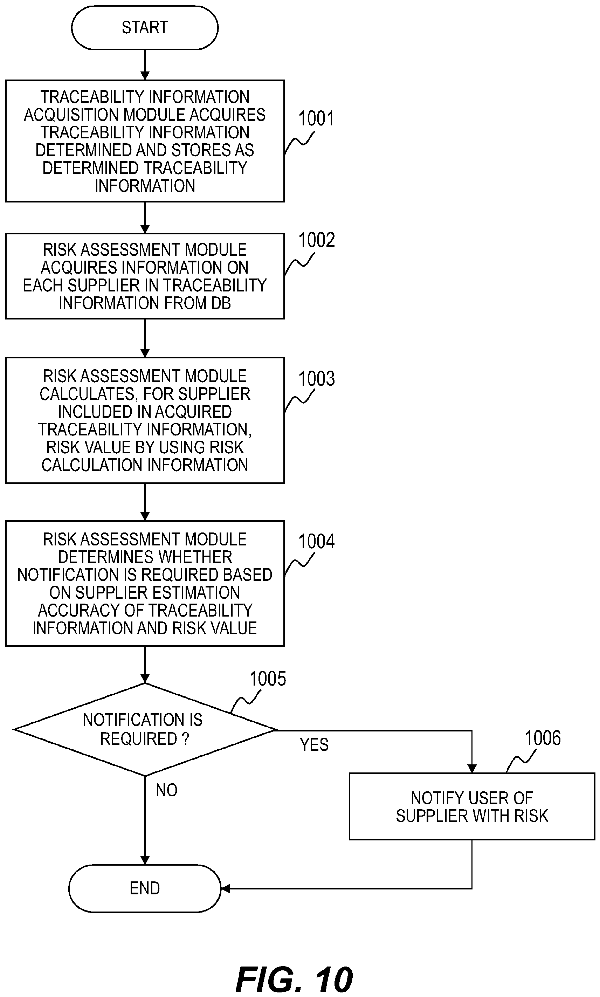

FIG. 10 is a flow chart for illustrating an example of processing of the supplier risk assessment device 103 in the first embodiment of this invention.

First, the traceability information acquisition module 207 acquires traceability information determined (that is, for which confirmation by the service user has been made), and stores the traceability information as the determined traceability information 210 (Step 1001).

Next, the risk assessment module 208 acquires information on each supplier included in the acquired traceability information from a database (Step 1002). This database may be a database in which information on each company that is external to the supplier risk assessment device 103 is registered, or may be held in the supplier risk assessment device 103.

Next, the risk assessment module 208 calculates a risk value for each supplier included in the acquired traceability information by using the risk calculation information 211 (Step 1003).

Next, the risk assessment module 208 determines whether or not notification of the risk value calculated for each supplier is required based on the accuracy of estimation of the supplier in the traceability information and the risk value (Step 1004, Step 1005). When notification is determined to be required, the risk notification module 209 notifies the service user of the supplier with the risk (Step 1006).

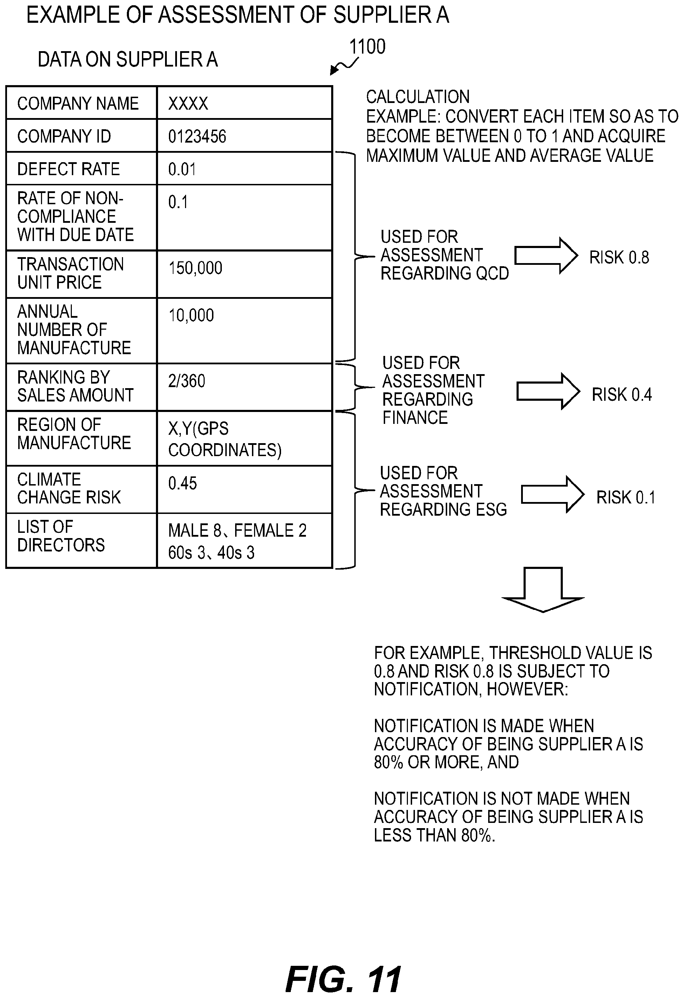

FIG. 11 is an explanatory diagram for illustrating an example of processing of the supplier risk assessment device 103 in the first embodiment of this invention.

A data example 1100 regarding a supplier illustrated in FIG. 11 shows an example of data acquired from a database on a certain supplier (Supplier A). This example includes information such as company name, company ID, defect rate, rate of non-compliance with due date, transaction unit price, annual number of manufacture, ranking by sales amount, region of manufacture, climate change risk, and list of directors of Supplier A. The risk assessment module 208 assesses risks based on such information. The risks to be assessed are not limited but, for example, at least one of the risk with regard to QCD (quality, cost, and due date), the risk with regard to finance, or the risk with regard to ESG (environment, corporate society, and corporate governance) may be assessed.

For example, the risk assessment module 208 may assess the risk with regard to QCD based on defect rate, rate of non-compliance with due date, transaction unit price, and annual number of manufacture, assess the risk with regard to finance based on ranking by sales amount, and assess the risk with regard to ESG based on region of manufacture, climate change risk, and list of directors. Specifically, for each risk item, the risk value may be calculated to be one within the ranges of from 0 to 1, and a statistical value of the risk values for all items (such as the highest value or average value, for example) may be acquired as the entire risk value. Any method can be used for the specific calculation of the risk value for each item, and hence the details thereof are omitted.

Further, the calculation of the risk value by the risk assessment module 208 as described above is an example of how the risk assessment module acquires the risk value, and the risk assessment module 208 may acquire the risk value in a method other than the method described above. For example, the risk assessment module 208 may acquire risk values calculated by an external system.

In the example of FIG. 11, the risk value regarding QCD is calculated to be "0.8," the risk value regarding finance is calculated to be "0.4," and the risk value regarding ESG is calculated to be "0.1." Here, when the highest value is assumed as the entire risk value, "0.8" is output.

However, in Step 1004 of FIG. 10, whether the notification is required is determined based on both the risk value and the accuracy of estimation of the supplier. For example, a threshold value may be set for each of the risk value and the accuracy, and when both are the threshold value or more, the risk value may be determined to be notified.

For example, when the threshold value of risk value is 0.8, the risk value regarding QCD satisfies the criteria in the above-mentioned example. Here, when the threshold value of accuracy is 80%, the risk regarding QCD is notified when the accuracy of estimation of Supplier A is 80% or more. Meanwhile, when the accuracy of estimation of Supplier A is less than 80%, the risk is not notified.

When the supplier's risk is high, it is desired to notify the risk to the service user, but when the accuracy of estimation of the supplier is low, the need for notification becomes relatively low. By determining whether or not to notify based on the accuracy of estimation as described above, it is possible to notify risks for which necessity of notification is high.

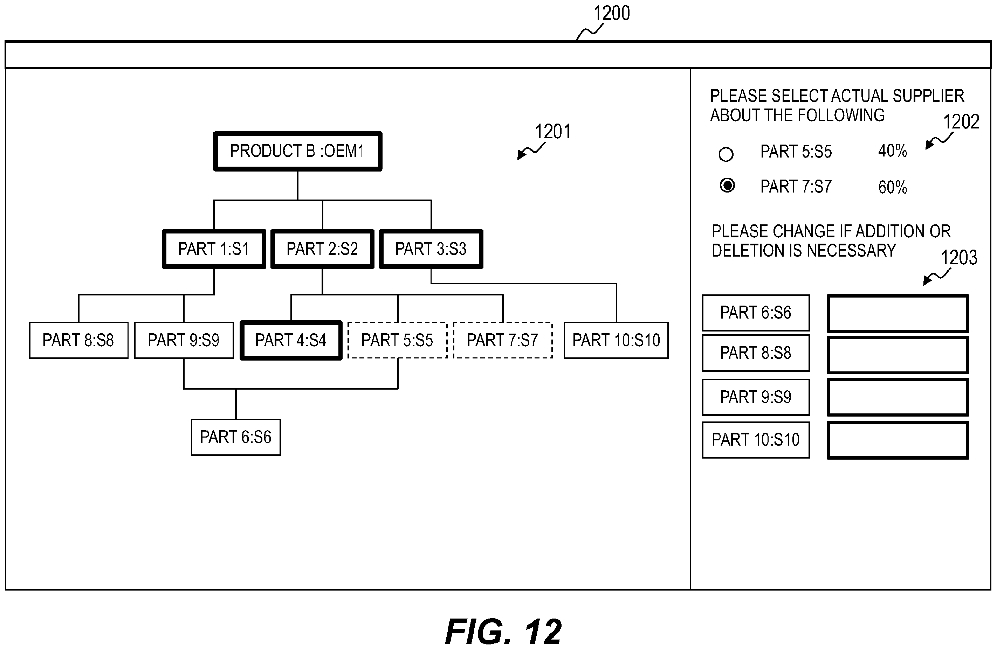

FIG. 12 is an explanatory diagram for illustrating an example of a screen displayed by the information terminal 105 in the first embodiment of this invention.

The display screen 1200 illustrated in FIG. 12 is an example of the screen displayed by the display unit 213 of the information terminal 105 when the traceability information determination module 203 presents the estimated traceability information to the service user. Specifically, the display screen 1200 includes a traceability information display section 1201, a supplier selection section 1202, and a change input section 1203.

The traceability information estimated by the traceability information estimation module 202 is displayed in the traceability information display section 1201. For example, information similar to the estimation result 404 of FIG. 4 may be displayed. In the example of FIG. 12, the information on the determined child parts and their suppliers is displayed in a thick solid line frame, the information on the estimated child parts and their suppliers are displayed in a thin solid line frame, the information on the estimated child parts and their suppliers including a plurality of candidates are displayed in a thin dashed line frame, and the estimated parent-child relation is displayed in a thin solid line that connects frames.

When the estimation result of the traceability information includes a plurality of candidates, the supplier selection section 1202 displays information to allow the service user to select one of the candidates. For example, as illustrated in the estimation result 404 of FIG. 4, it is estimated that two candidates "Part 5: S5" and "Part 7: S7" are estimated as a child part of "Part 2: S2," and when the respective accuracies are "40%" and "60%," such information is displayed in the supplier selection section 1202. The service user can select "Part 5: S5" or "Part 7: S7" by operating the input unit 212.

The change input section 1203 displays information about child parts that have been estimated and have not yet been determined. The service user can, for example, change, delete, or add new information to the estimation results by operating the input unit 212 to input the required information to the change input section 1203.

### [Second Embodiment]

Next, a second embodiment of this invention is described. A configuration of a system according to the second embodiment is, except for the differences described below, the same as that of the system according to the first embodiment illustrated in FIG. 1 to FIG. 12, and hence the description thereof is omitted.

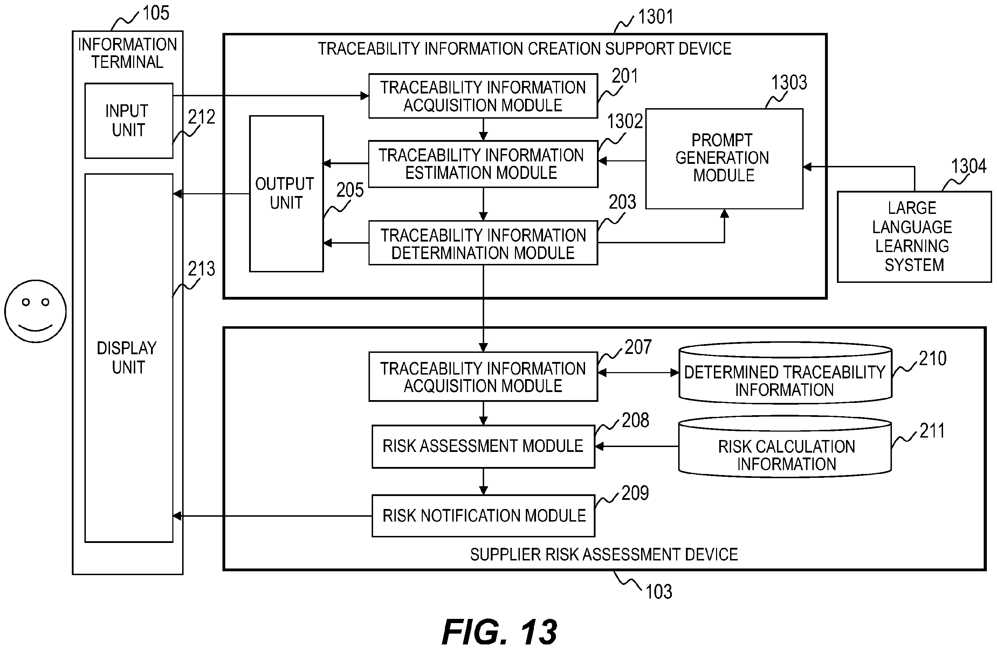

FIG. 13 is a block diagram for illustrating an example of an internal configuration of the system according to the second embodiment of this invention.

The system of the second embodiment is the same as the system of the first embodiment, except that the traceability information creation support device 102 is replaced with a traceability information creation support device 1301. The traceability information creation support device 1301 is the same as the traceability information creation support device 102 in the first embodiment, except that the traceability information creation support device 1301 does not hold the traceability information for learning 206, and the traceability information learning module 204 is replaced with a prompt generation module 1303, and the traceability information estimation module 202 is replaced with a traceability information estimation module 1302.

In the second embodiment, the traceability information estimation module 1302 inputs the input partial traceability information to the prompt generation module 1303 in Step 702 of FIG. 7, Step 802 of FIG. 8, and Step 902 of FIG. 9. The prompt generation module 1303 generates prompts for estimating lacking traceability information based on the input partial traceability information, inputs the generated prompts to a large language learning system 1304, and returns the output to the traceability information estimation module 1302. The processing of the traceability information estimation module 1302 other than the above is the same as that of the traceability information estimation module 202 in the first embodiment.

Further, in the second embodiment, Step 705 of FIG. 7, Step 806 of FIG. 8, and Step 906 of FIG. 9 are not executed.

The large language learning system 1304 may be a publicly available general-purpose system, for example, so-called generative AI. When the data learned to create the large language learning system 1304 includes information on, for example, specifications of various products, design information, and the company that manufactured the product, it is considered that traceability information can be estimated by inputting appropriate prompts to the large language learning system 1304. Accordingly, creation of traceability information can be supported without creating a dedicated learning model.

The system according to the embodiments of this invention may also be configured as follows.
(1) A traceability information creation support system (the entire system including the traceability information creation support device 102, or further the supplier risk assessment device 103, for example), including: a processor (the processor 301, for example); and a storage device (the memory 302 and the storage device 303, for example), wherein the storage device holds a model (the learning model 402 created by the traceability information learning module 204, for example) that has learned a relationship between an article (the product or the part, for example) and an article forming the article and a supplier thereof, and wherein the processor is configured to: receive an input of traceability information indicating a relationship between an article and at least one article forming the article and a supplier thereof (Step 701, Step 801, and Step 901, for example); estimate, by using the model, one or more articles and suppliers thereof that are lacking in the input traceability information (Step 702, Step 802, and Step 902, for example); output the estimated one or more articles and suppliers thereof for confirmation by a user (Step 703, Step 804, and Step 903, for example); store one or more articles and suppliers thereof confirmed by the user in the storage device as determined traceability information (Step 703, Step 805, and Step 904, for example); and update the model by learning the determined traceability information (Step 705, Step 806, and Step 906, for example).

Accordingly, creation of traceability information including even information on suppliers that a company itself cannot grasp directly is supported.

(2) The traceability information creation support system according to the above-mentioned item (1), wherein the estimating the one or more articles and the suppliers thereof that are lacking in the input traceability information includes estimating, by the processor, by using the model, one or more articles that form an article included in the input traceability information and suppliers thereof, and wherein the processor is configured to: repeat estimating the one or more articles forming the article included in the input traceability information and the suppliers thereof until the processor reaches an article that is further impartible (loop of Step 802 and Step 803, for example); output all the estimated one or more articles and suppliers thereof for the confirmation by the user (Step 804, for example); and store an article and a supplier thereof confirmed by the user among all the output one or more articles and the suppliers thereof in the storage device as the determined traceability information (Step 805, for example).

Accordingly, the estimated traceability information can be confirmed collectively by the user.

(3) The traceability information creation support system according to the above-mentioned item (1), wherein the estimating the one or more articles and the suppliers thereof that are lacking in the input traceability information includes estimating, by the processor, by using the model, one or more articles forming an article included in the input traceability information and suppliers thereof, and wherein the processor is configured to: estimate an article forming the article included in the input traceability information and a supplier thereof; output the estimated article and supplier thereof for the confirmation by the user; and repeat storing an article and a supplier thereof confirmed by the user in the storage device as the determined traceability information until the processor reaches an article that is further impartible (loop of Step 902 to Step 905, for example).

Accordingly, the estimated traceability information can be confirmed each time by the user.

(4) The traceability information creation support system according to the above-mentioned item (1), wherein the estimating the one or more articles and the suppliers thereof that are lacking in the input traceability information includes estimating, by the processor, by using the model, one or more articles formed by an article included in the input traceability information and suppliers thereof, wherein the processor is configured to: repeat estimating the one or more articles formed by the article included in the input traceability information and the suppliers thereof until the processor reaches an article corresponding to a final product (loop of Step 802 and Step 803, for example); output all the one or more estimated articles and the suppliers thereof for the confirmation by the user (Step 804, for example); and store an article and a supplier thereof confirmed by the user among all the output one or more articles and the suppliers thereof in the storage device as the determined traceability information (Step 805, for example).

Accordingly, the estimated traceability information can be confirmed collectively by the user.

(5) The traceability information creation support system according to the above-mentioned item (1), wherein the estimating the one or more articles and the suppliers thereof that are lacking in the input traceability information includes estimating, by the processor, by using the model, one or more articles formed by an article included in the input traceability information and suppliers thereof, and wherein the processor is configured to: estimate an article formed by the article included in the input traceability information and a supplier thereof; output the estimated article and supplier thereof for the confirmation by the user; and repeat storing an article and a supplier thereof confirmed by the user in the storage device as the determined traceability information until the processor reaches an article that corresponds to a final product(loop of Step 902 to Step 905, for example).

Accordingly, the estimated traceability information can be confirmed each time by the user.

(6) The traceability information creation support system according to the above-mentioned item (1), wherein the storage device holds traceability information for learning (the traceability information for learning 206, for example) that includes one or more relationships between an article and an article forming the article and a supplier thereof, and wherein the processor is configured to: update the traceability information for learning by adding the determined traceability information; and update the model by learning the updated traceability information for learning with a weight greater than the weight of other traceability information being added to the added determined traceability information in the updated traceability information for learning (Step 705, Step 806, and Step 906, for example).

Accordingly, the learning model with a high accuracy in which newer information is more strongly reflected can be created.

(7) The traceability information creation support system according to the above-mentioned item (1), wherein the processor is configured to output, when the processor has estimated, by using the model, a plurality of combinations of articles and suppliers thereof as a plurality of candidates for one article and a supplier thereof that are lacking in the input traceability information, an accuracy of the estimation of each of the plurality of combinations for the confirmation by the user, and wherein the confirmation by the user includes selecting one of the plurality of candidates.

Accordingly, the confirmation of traceability information by the user can be supported.

(8) The traceability information creation support system according to the above-mentioned item (1), wherein the processor is configured to: acquire a risk value of each of the suppliers included in the determined traceability information (Step 1003, for example); and determine whether to notify the user of a risk of the each of the suppliers based on the risk value of the each of the suppliers and an accuracy of the estimation of the each of the suppliers (Step 1004 to Step 1005, for example).

Accordingly, risks for which necessity of notification is high can be notified considering not only the risk value but also the accuracy of the estimation.

(9) The traceability information creation support system according to the above-mentioned item (8), wherein the processor is configured to notify the user of the risk value of the each of the suppliers when the risk value of the each of the suppliers is higher than a predetermined criterion and the accuracy of the estimation of the each of the suppliers is higher than a predetermined criterion (Step 1004 to Step 1006, for example).

Accordingly, risks for which necessity of notification is high can be notified considering not only the risk value but also the accuracy of the estimation.

(10) A traceability information creation support system (the entire system including the traceability information creation support device 1301 and the supplier risk assessment device 103, for example), including a processor (the processor 301, for example), and a storage device (the memory 302 and the storage device 303, for example), wherein the processor is configured to: receive an input of traceability information indicating a relationship between an article and at least one article forming the article and a supplier thereof (Step 701, Step 801, and Step 901, for example); estimate, by using a large language learning system, one or more articles and suppliers thereof that are lacking in the input traceability information (Step 702, Step 802, and Step 902, for example); output the estimated one or more articles and suppliers thereof for confirmation by a user (Step 703, Step 804, and Step 903, for example); store one or more articles and suppliers thereof confirmed by the user in the storage device as determined traceability information (Step 703, Step 805, and Step 904, for example); acquire a risk value of each of the suppliers included in the determined traceability information (Step 1003, for example); and determine whether to notify the user of a risk of the each of the suppliers based on the risk value of the each of the suppliers and an accuracy of the estimation of the each of the suppliers (Step 1004 and Step 1005).

Accordingly, by using a general-purpose model, such as so-called generative AI, creation of traceability information including even information on suppliers that a company itself cannot grasp directly can be supported.

This invention is not limited to the embodiments described above, and includes various modification examples. For example, the above-mentioned embodiments have been described in detail for better understanding of this invention, but this invention is not necessarily limited to an invention having all the configurations described above. A part of the configuration of a given embodiment may be replaced with a configuration of another embodiment, or the configuration of another embodiment can be added to the configuration of a given embodiment. Another configuration may be added, deleted, or replace a part of the configuration of each embodiment.

A part or all of each of the above-mentioned configurations, functions, processing modules, processing means, and the like may be implemented by hardware by being designed as, for example, an integrated circuit. Each of the above-mentioned configurations, functions, and the like may be implemented by software by a processor interpreting and executing a program for implementing each function. Information such as the programs, tables, files, and the like for implementing each of the functions may be stored in a storage device such as a nonvolatile semiconductor memory, a hard disk drive, or a solid state drive (SSD), or in a computer-readable non-transitory data storage medium such as an IC card, an SD card, or a DVD.

The control lines and information lines are illustrated to the extent considered to be required for description, and not all the control lines and information lines on the product are necessarily illustrated. In practice, it may be considered that almost all configurations are coupled to each other.

## Claims

1. A traceability information creation support system, comprising:
a processor; and
a storage device,
wherein the storage device holds an article and a model that has learned a relationship between an article and an article forming the article and a supplier thereof, and
wherein the processor is configured to:
receive an input of traceability information indicating a relationship between an article and at least one article forming the article and a supplier thereof;
estimate, by using the model, one or more articles and suppliers thereof that are lacking in the input traceability information;
output the estimated one or more articles and suppliers thereof for confirmation by a user;
store one or more articles and suppliers thereof confirmed by the user in the storage device as determined traceability information; and
update the model by learning the determined traceability information.

2. The traceability information creation support system according to claim 1,
wherein the estimating the one or more articles and the suppliers thereof that are lacking in the input traceability information includes estimating, by the processor, by using the model, one or more articles that form an article included in the input traceability information and suppliers thereof, and
wherein the processor is configured to:
repeat estimating the one or more articles forming the article included in the input traceability information and the suppliers thereof until the processor reaches an article that is further impartible;
output all the estimated one or more articles and suppliers thereof for the confirmation by the user; and
store an article and a supplier thereof confirmed by the user among all the output one or more articles and the suppliers thereof in the storage device as the determined traceability information.

3. The traceability information creation support system according to claim 1,
wherein the estimating the one or more articles and the suppliers thereof that are lacking in the input traceability information includes estimating, by the processor, by using the model, one or more articles forming an article included in the input traceability information and suppliers thereof, and
wherein the processor is configured to:
estimate an article forming the article included in the input traceability information and a supplier thereof;
output the estimated article and supplier thereof for the confirmation by the user; and
repeat storing an article and a supplier thereof confirmed by the user in the storage device as the determined traceability information until the processor reaches an article that is further impartible.

4. The traceability information creation support system according to claim 1,
wherein the estimating the one or more articles and the suppliers thereof that are lacking in the input traceability information includes estimating, by the processor, by using the model, one or more articles formed by an article included in the input traceability information and suppliers thereof, and
wherein the processor is configured to:
repeat estimating the one or more articles formed by the article included in the input traceability information and the suppliers thereof until the processor reaches an article corresponding to a final product;
output all the one or more estimated articles and the suppliers thereof for the confirmation by the user; and
store an article and a supplier thereof confirmed by the user among all the output one or more articles and the suppliers thereof in the storage device as the determined traceability information.

5. The traceability information creation support system according to claim 1,
wherein the estimating the one or more articles and the suppliers thereof that are lacking in the input traceability information includes estimating, by the processor, by using the model, one or more articles formed by an article included in the input traceability information and suppliers thereof, and
wherein the processor is configured to:
estimate an article formed by the article included in the input traceability information and a supplier thereof;
output the estimated article and supplier thereof for the confirmation by the user; and
repeat storing an article and a supplier thereof confirmed by the user in the storage device as the determined traceability information until the processor reaches an article that corresponds to a final product.

6. The traceability information creation support system according to claim 1,
wherein the storage device holds traceability information for learning that includes one or more relationships between an article and an article forming the article and a supplier thereof, and
wherein the processor is configured to:
update the traceability information for learning by adding the determined traceability information; and
update the model by learning the updated traceability information for learning with a weight greater than the weight of other traceability information being added to the added determined traceability information in the updated traceability information for learning.

7. The traceability information creation support system according to claim 1,
wherein the processor is configured to output, when the processor has estimated, by using the model, a plurality of combinations of articles and suppliers thereof as a plurality of candidates for one article and a supplier thereof that are lacking in the input traceability information, an accuracy of the estimation of each of the plurality of combinations for the confirmation by the user, and
wherein the confirmation by the user includes selecting one of the plurality of candidates.

8. The traceability information creation support system according to claim 1, wherein the processor is configured to:
acquire a risk value of each of the suppliers included in the determined traceability information; and
determine whether to notify the user of a risk of the each of the suppliers based on the risk value of the each of the suppliers and an accuracy of the estimation of the each of the suppliers.

9. The traceability information creation support system according to claim 8, wherein the processor is configured to notify the user of the risk value of the each of the suppliers when the risk value of the each of the suppliers is higher than a predetermined criterion and the accuracy of the estimation of the each of the suppliers is higher than a predetermined criterion.

10. The traceability information creation support system according to claim 1,
wherein the processor is configured to:
estimate, by using a large language learning system instead of the model, one or more articles and suppliers thereof that are lacking in the input traceability information;
acquire a risk value of each of the suppliers included in the determined traceability information; and
determine whether to notify the user of a risk of the each of the suppliers based on the risk value of the each of the suppliers and an accuracy of the estimation of the each of the suppliers.

11. A traceability information creation support method, which is executed by a computer system,
the computer system including a processor and a storage device,
the storage device holding a model that has learned a relationship between an article and an article forming the article and a supplier thereof,
the traceability information creation support method comprising:
receiving, by the processor, an input of traceability information indicating a relationship between an article and at least one article forming the article and a supplier thereof;
estimating, by the processor, by using the model, one or more articles and suppliers thereof that are lacking in the input traceability information;
outputting, by the processor, the estimated one or more articles and suppliers thereof for confirmation by a user;
storing, by the processor, one or more articles and suppliers thereof confirmed by the user in the storage device as determined traceability information; and
updating, by the processor, the model by learning the determined traceability information.
